# EUROPEAN PATENT SPECIFICATION

(11) **EP 1 606 946 B1**
(45) Date of publication and mention of the grant of the patent: **11.04.2007**
(21) Application number: 04710572.1
(22) Date of filing: 12.02.2004
(51) Int. Cl.: H04N 7/173, H04B 3/54

(54) **METHOD AND MODEM FOR DATA COMMUNICATION IN CABLE TELEVISION NETWORKS**
VERFAHREN UND MODEM ZUR DATENKOMMUNIKATION IN KABELFERNSEHNETZWERKEN
PROCEDE ET MODEM POUR COMMUNICATION DE DONNEES DANS DES RESEAUX DE TELEDISTRIBUTION

(30) Priority: 07.03.2003 SE 0300604
(43) Date of publication of application: 21.12.2005
(73) Proprietor: Teleste Oyj, 20101 Turku (FI)
(72) Inventor: VUNNEL, Lasse, S-591 32 MOTALA (SE); VUNNEL, Hannu, S-591 32 MOTALA (SE)
(74) Representative: Pursiainen, Timo Pekka
(86) International application number: PCT/SE2004/000177
(87) International publication number: WO 2004/080075

(56) References cited:
- WO-A1-01/67625
- WO-A1-96/37062

## Description

### Technical field

The present patent application relates to a method for data communication in cable television networks in accordance with claim 1.

The present patent application further relates to a modem for data communication in cable television networks in accordance with claim 6 and a cable television network in accordance with claim 10.

### Background of the invention

There is an increasing demand for cost effective solutions especially for Internet connections in MATV (Master Antenna Television) and SMATV (Satellite Master Antenna Television) networks. A common solution for Internet access is to use a modem in the ordinary telephone line. Other solutions using the telephone line such as ISDN and ADSL are also often used for both private and office use when higher data rate is required. All these telephone line solutions are mainly used for point to point communication. Sharing this type of communication line with several users still requires access networks in the buildings. One alternative is to build a separate network for data communication, which is the standard solution for the office or home networks. In many areas this may be expensive compared to alternatively use existing cables such as the coaxial TV network.

People connected to CATV (Cable Television) networks may get access to Internet via a CATV modem. This solution is mainly available in larger networks due to the expensive CATV head end equipment required for data communication in CATV networks also referred as DOCSIS^{™} (Data Over Cable Service Interface Specification) which is the standard, CableLabs® Certified^{™}, technology for CATV networks, DOCSIS^{™} defines interface requirements for cable modems involved in high-speed data distribution over cable television system networks.

A common problem in coaxial cable networks is the noise density, especially in the band below the TV channels which is usually 5-65 MHz. This band is allocated for upstream data (data from the users to the CATV head end). Even though the coaxial cable is shielded, the noise is mainly caused by the surrounding disturbances from different sources such as short-wave transmission, engines etc. CATV modems also contribute with noise from their active parts to the network. Gathering signals to the head end is more difficult from a noise and disturbance point of view compared to distributing signals from the head end. This is due to all wiring in the network is summed together to a single point. When installing a data communication system in CATV networks it is therefore often required to upgrade the network components such as distribution amplifiers and maybe other passive components such as combiners, taps, TV outlets etc.

The existing modulation technique used for CATV networks is called QAM (Quadrature Amplitude Modulation) and requires good signal to noise and signal to interference performance especially when running higher data rates in the network and in particular in the band below TV channels. The QAM signals are divided in two separate channels which are for downstream data (data from CATV head end to user) and upstream data (data from the user to the CATV head end). The downstream may be located on any space in the ordinary TV-band e.g. up to 860 MHz in Europe but may also be higher in other countries or other special applications.

The above described data distribution over cable television system networks is previously known through the DOCSIS^{™} specification, which is available from CableLabs® (Cable Television Laboratories Inc., Louisville, USA).

A disadvantage with known implementations of the prior art DOCSIS^{™} specification mentioned above is that expensive head end equipment is required for data communication in accordance with this specification and that the existing modulation technique used for CATV networks in accordance with the DOCSIS^{™} specification is QAM (Quadrature Amplitude Modulation), which requires good signal to noise and signal to interference performance especially when running higher data rates In the network and in particular in the band below TV channels. Therefore it is often required to upgrade network components, such as distribution amplifiers and maybe other passive components such as combiners, taps, TV outlets etc, in order to adapt CATV networks to enable data communication in accordance with the DOCSIS^{™} specification. The cost associated with such an upgrade can be considerable.

The above cost aspects are often show stoppers for any upgrade in order to provide data communication and data network access in small and medium sized coaxial cable networks, such as MATV (Master Antenna Television) and SMATV (Satellite Master Antenna Television) networks.

D1: WO96/37062, discloses a two-way point-to-multipoint data transmission system utilizing an existing CATV system, which may comprise coaxial cable segments, fiber segments and combinations of these. The modems included in the system, i.e. the headend modem and the downstream modems located at user nodes are arranged to establish a mutual data communication connection using OFDM modulation, whereby data signal can be transferred in CATV system along with a television signal.

### Summary of the invention

One object of the invention is to provide an improved method for data communication in cable television networks.

This object is achieved in accordance with the characterizing portion of claim 1.

Thanks to the provision of host and node modems using power line transceivers for handling data communication and providing modulation/demodulation cable television networks, and especially MATV and SMATV networks can get an affordable and easy adaptable solution for sharing data capacity over the existing infrastructure of a coaxial cable TV network. Also the cost of network upgrade is minimized thanks to the robustness of the modulation technology of power line transceivers.

A further object of the invention is to provide an improved modem for data communication in cable television networks.
This object is achieved in accordance with the characterizing portion of claim 6.
Furthermore, claim 10 specifies a related cable television network.

Thanks to the provision of power line transceivers for handling data communication and providing modulation/demodulation modems for cable television networks, and especially MATV and SMATV networks are provided, which enable affordable and easy adaptable solutions for sharing data capacity over the existing infrastructure of a coaxial cable TV network. Also the cost of network upgrade is minimized thanks to the robustness of the modulation technology of power line transceivers.

Preferred embodiments are listed in the dependent claims.

### Description of drawings

In the following, the invention will be described in greater detail with reference to attached drawings, in which:

Fig. 1 shows a block schematic of a host/node modem according to the embodiments of the invention.

Fig. 2 shows a block schematic of a diplex filter for bypassing distribution amplifiers which are not equipped with internal diplex filters.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

This invention relates to data communication and data network access in different types of coaxial cable networks, in particular MATV (Master Antenna Television) and SMATV (Satellite Master Antenna Television) networks, which are common access networks for distribution of TV channels in homes, hotels, schools, offices etc.

Another technique using existing wires is data communication via the power lines for home or office use. This method requires an extremely robust modulation technique due to the noisy environment the unshielded power lines are exposed to. This modulation is usually a form of spread spectrum modulation e.g. OFDM (Orthogonal Frequency Division Multiplex). The great advantage of this modulation is the dynamic bandwidth adaptation depending on reception quality which makes it possible to distribute high speed data signals up to 200-300 meters in power lines with the current technology. The power line data communication solution is a relatively new technology and has sophisticated features for media access controlling and encryption methods which are ideal for several users sharing the access network. An attempt at standardizing the above technology has been made by a group of industry leading companies, who formed the HomePlug Powerline Alliance to create an industry standard for high-speed home networking via power lines. This standard today is available as the HomePlug 1.0 specification.

In accordance with the present invention, by using power line data communication technology, which is a relative high volume and low-cost technology, MATV and SMATV networks can get an affordable and easy adaptable solution for sharing data capacity over existing infrastructure of the coaxial TV network. Also the cost of network upgrade is minimized thanks to the robustness of the modulation technology necessary for power line communication.

A new method of making a high performance data communication system suitable for MATV and SMATV networks is to adapt the technology of power line communication for distribution in coaxial cable networks. The coaxial cable distributes the data signals much longer distances than the power lines due to the lower attenuation and overall better performance. The robust modulation of the power line technology will perform excellent in the coaxial cable, especially in the noisy band below TV channels and does not require the high performance as QAM modulated signals. QAM today, as mentioned above, is the standard modulation for CATV networks.

One difference between QAM modulation and the modulation used for the power line is the wider bandwidth of the power line modulation compared to QAM. This is acceptable in smaller networks like the MATV and SMATV networks due to the TV band is normally not that occupied as in large scale networks. In a transparent system, described below, no TV channels are occupied at all by the data signals.

The coaxial cable networks have different structures mainly depending on the size of the networks. Small networks require only a few distribution amplifiers and large networks require more amplifiers and also better performance of the TV distribution equipment. Therefore this new data communication system is divided in three systems depending on the network size. Transparent down- and upstream, Frequency converted downstream and transparent upstream and Frequency converted down- and upstream.

The fundamental in all three alternative systems is that the power line transceiver chip is used for handling all data communication in the system and also the modulation is provided from the chip. The signals from the power line transceiver chip, TX (Transmit data) and RX (Receive data) are separately treated for each system to finally be combined into a 75 ohm coaxial connector to access the coaxial cable network via the ordinary TV outlet. The "Host modem" is the communication device used in the head end station communicating with the users. Each of the user devices is referred as "Node modem". In all systems it is also possible to "bridge" (repeat) the data signals to overcome the distance of collision domain.

In a first embodiment is described a transparent system suitable for the smallest coaxial cable networks with shorter cable segments, which therefore have no or only a few distribution amplifiers. The power line modulation method in the coaxial cable is used in the same way as in the power lines and on the same frequencies. Since the power line communication only uses frequencies corresponding with the frequencies below the TV channels for both down- and upstream data, no TV channels are occupied in this system. Distribution amplifiers in the network may not pass data signals in both directions in the frequency band below TV channels and may therefore be bypassed with an external passive diplex filter allowing the data signals pass transparently in both down- and upstream directions. Another solution is upgrading to amplifiers with an internal diplexer filter. Other passive network components or TV outlets do not normally have to be changed.

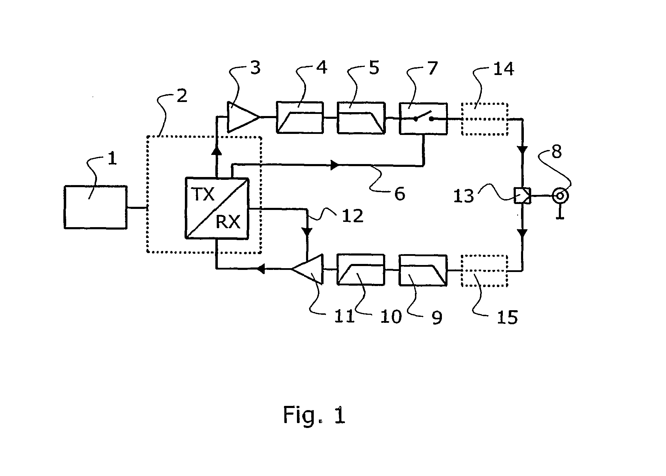

In figure 1 is shown a block schematic of a host/node modem in accordance with the present invention. A PC (personal computer) interface and DC (direct current) feed 1 is connected to a power line transceiver chip 2 The TX (transmit data) signal from the power line transceiver chip 2 is amplified by the amplifier 3 and filtered by the high pass filter 4 and low pass filter 5, which e.g. pass signals the frequency of which are in the band 4-25 Mhz. The TX enable signal 6 controls the switch 7 to pass when transmitting data and block when receiving data. This is done to prevent additional noise in the signal path from the different nodes that could reduce the system dynamic range.

The RX (receive data) signal from the coaxial cable network 8 is filtered by the low pass filter 9 and high pass filter 10 and amplified by the amplifier 11 and AGC (Automatic Gain Control) controlled via line 12. The AGC mechanism is built in the power line transceiver chip 2 to maintain the same input level.

Finally the RX and TX signals are impedance matched and summed 13 into a single 75 ohm RF connector 8.

The block 14 is an option for frequency conversion of the TX signal from the power line transceiver chip 2 for communication on separate channels.

The block 15 is an option for frequency conversion of the RX signal to the power line transceiver chip 2 for communication on separate channels.

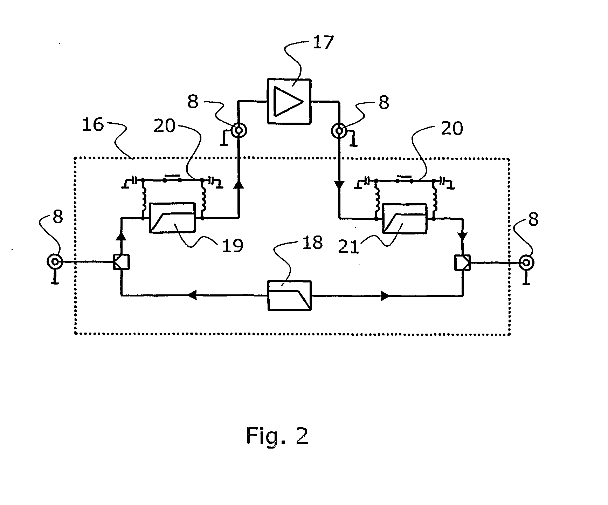

As described above, if the down- and upstream data signals are transmitted below the TV band of the coaxial cable network containing distribution amplifiers, the data may not pass through these unless the amplifiers do not have internal diplexer filters. Therefore a passive diplex filter 16, as shown in figure 2, has to be connected to the amplifiers 17 allowing the data pass transparently in both directions below the TV band. This filter 16 will have a minor attenuation of the TV signals but is easily compensated by increasing the gain in the amplifiers 17.

CATV cable is fed to the diplex filter 16 which will pass the data in both directions through a low pass filter 18 which separates the data channel from the TV band transmitted in the coaxial cable. The TV channels are fed via a high pass filter 19 starting from TV band which will separate the TV band from the Data signals. DC voltage is allowed to pass 20 for possible remote DC feed via the coaxial cable to the amplifiers 17. The output of this high pass filter 19 is fed into the distribution amplifier 17 to be looped back into a second high pass filter 21 with DC pass 20 which is the same as for the first high pass filter 19. All connectors 8 are impedance matched to 75 ohm.

In a second embodiment the above described system is adapted for networks with longer coaxial cable segments and which requires several distribution amplifiers. In this case the TX and RX signals are divided in two separate frequencies (split band). The downstream data is frequency converted to a suitable channel within the frequency range of 47-1000 MHz. The upstream data is still using the original frequency in the band below TV channels just like in the transparent system. The amplifiers must be equipped with passive or active "return path" (signal pass for upstream data to the head end) and no external bypass filters is needed in this system. Other passive network components or TV outlets do not normally have to be changed. It is also possible to use several downstream channels and share the same upstream channel.

In the host modem the TX data is frequency converted in block 14 of figure 1 for any selectable frequency utilizing the band 1 MHz -1000 MHz. RX data is handled transparently, i.e. block 15 of figure 1 only passes on the signals.

In the node modem the RX data is frequency converted in block 15 of figure 1 for any selectable frequency utilizing the band 1 MHz -1000 MHz. TX data is handled transparently, i.e. block 14 of figure 1 only passes on the signals.

In a third embodiment the above described system is adapted to be used for larger networks with longer cable segments, which require several amplifiers with active distribution in both down- and upstream direction. Also several different downstreamand upstream channels is possible to be used for higher data rate to users by dividing the network into different domains. It is also possible to use several downstream channels and share the same upstream channel. The downstream data is frequency converted to a suitable channel within the frequency range of 47-1000 MHz. The upstream data is frequency converted to a suitable channel within the frequency range of 1-1000 MHz.

In the host and node modem the TX data is frequency converted in block 14 of figure 1 for any selectable frequency utilizing the band1 MHz -1000MHz. RX data is frequency converted in block 15 of figure 1 for any selectable frequency utilizing the band 1 MHz -1000MHz.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for providing for data communication in cable television networks, such as Master Antenna Television networks and Satellite Master Antenna Television networks, wherein at least a part of cable segments provided to user nodes are implemented as coaxial cable, and the cable television network further comprises at least one host modem and a plurality of node modems, **characterized in that** the host and node modems comprise
a power line transceiver, a first amplifying and filtering means connected to the receive (RX) signal path of the power line transceiver, a second amplifying and filtering means connected to the transmit (TX) signal path of the power line transceiver, impedance matching means for matching the impedance of the receive (RX) and transmit (TX) signals paths, and a combiner for combining the signal paths into one, the method comprising:
establishing a data transmission connection between the at least one host modem and the plurality of node modems in via a coaxial cable segment, and
controlling the data transmission and sharing of access network resources among the plurality of node modems according to media access control used by said power line transceivers.

2. A method according to claim 1, **characterized by**:
bypassing any distribution amplifiers in the network using an external passive diplex filter allowing the data signals pass transparently in both directions.

3. A method according to claim 1, **characterized by**
bypassing any distribution amplifiers in the network through a signal pass allowing the data signals bypass said distribution amplifiers transparently In upstream direction,
carrying out a frequency conversion in the host modem for the data in the transmit (TX) signal path for any selectable frequency utilizing the band 1 MHz -1000 MHz and handling data in the receive (RX) signal path transparently (15), and
carrying out a frequency conversion in the node modems the data in the receive (RX) signal path for any selectable frequency utilizing the band 1 MHz -1000 MHz and handling data in the transmit (TX) signal path transparently (14).

4. A method according to claim 1, **characterized by**
carrying out a frequency conversion in both the host and node modems for the data in the transmit (TX) signal path for any selectable frequency utilizing the band 1 MHz -1000 MHz, and
carrying out a frequency conversion in both the host and node modems for the data in the receive (RX) signal path for any selectable frequency utilizing the band 1 MHz -1000 MHz.

5. A method according any one of the preceding claims, **characterized in that**
the power line transceivers used are operating in compliance with the HomePlug 1.0 specification by the HomePlug Powerline Alliance.

6. A modem for data communication in coaxial cable networks, such as Master Antenna Television networks and Satellite Master Antenna Television networks, **characterized in that** it comprises
a power line transceiver (2), a first amplifying (11) and filtering (9, 10) means connected to the receive (RX) signal path of the power line transceiver (2), a second amplifying (3) and filtering (4, 5) means connected to the transmit (TX) signal path of the power line transceiver (2), impedance matching means (13) for matching the impedance of the receive (RX) and transmit (TX) signals paths, and a combiner (13) for combining the signal paths into one, wherein
data transmission and sharing of access network resources between the modem and another similar modem is arranged to be controlled according to media access control used by said power line transceivers.

7. A modem according to claim 6, **characterized in that** it further comprises
means (14) for frequency converting data in the transmit (TX) signal path for any selectable frequency utilizing the band 1 MHz -1000 MHz and means (15) for handling data in the receive (RX) signal path transparently.

8. A modem according to claim 6, **characterized in that** it further comprises
means (15) for frequency converting data in the receive (RX) signal path for any selectable frequency utilizing the band 1 MHz -1000 MHz and means (14) for handling data in the transmit (TX) signal path is transparently.

9. A modem according to claim 6, **characterized in that** it further comprises
means (14) for frequency converting data in the transmit (TX) signal path for any selectable frequency utilizing the band1 MHz -1000 MHz and means (15) for frequency converting data in the receive (RX) signal path for any selectable frequency utilizing the band 1 MHz -1000 MHz.

10. A cable television network, such as Master Antenna Television network or Satellite Master Antenna Television network, wherein at least a part of cable segments provided to user nodes is implemented as coaxial cable, the cable television network further comprising at least one host modem and a plurality of node modems, **characterized in that** the host and node modems comprise
a power line transceiver, a first amplifying and filtering means connected to the receive (RX) signal path of the power line transceiver, a second amplifying and filtering means connected to the transmit (TX) signal path of the power line transceiver, impedance matching means for matching the impedance of the receive (RX) and transmit (TX) signals paths, and a combiner for combining the signal paths into one, wherein
the at least one host modem and the plurality of node modems are arranged in data transmission connection via a coaxial cable segment, and the host modem is arranged to control data transmission and sharing of access network resources among the plurality of node modems according to media access control used by said power line transceivers.

11. A cable television network according to claim 10, **characterized in that** the network further comprises
a distribution amplifier and an external passive diplex filter connected to said distribution amplifier for allowing the data signals bypass said distribution amplifier transparently in both directions.

12. A cable television network according to claim 10, **characterized in that** the network further comprises
a plurality of distribution amplifiers, each distribution amplifier comprising a signal pass for allowing the data signals bypass said distribution amplifiers transparently in at least one direction, wherein
the host modem is arranged to carry out a frequency conversion for the data in the transmit (TX) signal path for any selectable frequency utilizing the band 1 MHz - 1000 MHz and to handle the data in the receive (RX) signal path transparently; and
the node modems are arranged to carry out a frequency conversion for the data in the receive (RX) signal path for any selectable frequency utilizing the band 1 MHz -1000 MHz and to handle data In the transmit (TX) signal path transparently.

13. A cable television network according any one of the claims 10 - 12, **characterized in that**
the power line transceivers used are operating in compliance with the HomePlug 1.0 specification by the HomePlug Powerline Alliance.

## Patentansprüche

1. Verfahren zur Bereitstellung von Datenkommunikation in Kabelfernsehnetzwerken, beispielsweise Gemeinschaftsantennenanlagen und Satelliten-Gemeinschaftsantennenanlagen, wobei zumindest ein Teil der an Benutzerknoten vorgesehenen Kabelsegmente als Koaxialkabel ausgeführt ist und das Kabelfernsehnetzwerk ferner mindestens ein Host-Modem und mehrere Knoten-Modems umfasst, **dadurch gekennzeichnet, dass** die Host- und Knoten-Modems Folgendes umfassen:
einen Stromleitungs-Transceiver, ein an den Empfangssignalweg (RX) des Stromleitungs-Transceivers angeschlossenes erstes Verstärker- und Filtermittel, ein an den Sendesignalweg (TX) des Stromleitungs-Transceivers angeschlossenes zweites Verstärker- und Filtermittel, ein Impedanzanpassungsmittel zum Anpassen der Impedanz von Empfangssignalweg (RX) und Sendesignalweg (TX), und einen Kombinator, um die Signalwege zu einem zu kombinieren, wobei das Verfahren Folgendes umfasst:
Einrichten einer Datenübertragungsverbindung zwischen dem mindestens einen Host-Modem und den mehreren Knoten-Modems über ein Koaxialkabelsegment, und
Steuern der Datenübertragung und Aufteilen der Zugangsnetzwerk-Ressourcen unter den mehreren Knoten-Modems gemäß der von den Stromleitungs-Transceivern verwendeten Medienzugangssteuerung.

2. Verfahren nach Anspruch 1, **gekennzeichnet durch**:
Umgehen von Verteilverstärkern im Netzwerk, wobei ein externer passiver Diplexfilter verwendet wird, der die Datensignale transparent in beiden
Richtungen durchgehen lässt.

3. Verfahren nach Anspruch 1, **gekennzeichnet durch**
Umgehen von Verteilverstärkern im Netzwerk **durch** einen Signaldurchgang, der die Datensignale die Verteilverstärker transparent in Upstream-Richtung umgehen lässt,
Durchführen einer Frequenzwandlung im Host-Modem für die Daten im Sendesignalweg (TX) bei irgendeiner wählbaren Frequenz unter Verwendung des Bands von 1 MHz bis 1000 MHz und transparentes Behandeln (15) der Daten im Empfangssignalweg (RX), und
Durchführen einer Frequenzwandlung in den Knoten-Modems für die Daten im Empfangssignalweg (RX) bei irgendeiner wählbaren Frequenz unter Verwendung des Bands von 1 MHz bis 1000 MHz und transparentes Behandeln (14) der Daten im Sendesignalweg (TX).

4. Verfahren nach Anspruch 1, **gekennzeichnet durch**
Durchführen einer Frequenzwandlung in den Host- und Knoten-Modems für die Daten im Sendesignalweg (TX) bei irgendeiner wählbaren Frequenz unter Verwendung des Bands von 1 MHz bis 1000 MHz, und
Durchführen einer Frequenzwandlung in den Host- und Knoten-Modems für die Daten im Empfangssignalweg (RX) bei irgendeiner wählbaren Frequenz unter Verwendung des Bands von 1 MHz bis 1000 MHz.

5. Verfahren nach irgendeinem der vorangehenden Ansprüche, **dadurch gekennzeichnet, dass**
die verwendeten Stromleitungs-Transceiver gemäß der HomePlug-1.0-Spezifikation der HomePlug Powerline Alliance betrieben werden.

6. Modem zur Datenkommunikation in Koaxialkabelnetzwerken, beispielsweise Gemeinschaftsantennenanlagen und Satelliten-Gemeinschaftsantennen anlagen, **dadurch gekennzeichnet, dass** es Folgendes umfasst:
einen Stromleitungs-Transceiver (2), ein an den Empfangssignalweg (RX) des Stromleitungs-Transceivers (2) angeschlossenes erstes Verstärkermittel (11) und Filtermittel (9, 10), ein an den Sendesignalweg (TX) des Stromleitungs-Transceivers (2) angeschlossenes zweites Verstärkermittel (3) und Filtermittel (4, 5), ein Impedanzanpassungsmittel (13) zum Anpassen der Impedanz von Empfangssignalweg (RX) und Sendesignalweg (TX), und einen Kombinator (13), um die Signalwege zu einem zu kombinieren, wobei
die Datenübertragung und die Aufteilung der Zugangsnetzwerk-Ressourcen zwischen dem Modem und einem anderen ähnlichen Modem so anzuordnen sind, dass sie gemäß der von den Stromleitungs-Transceivern verwendeten Medienzugangssteuerung gesteuert werden.

7. Modem nach Anspruch 6, **dadurch gekennzeichnet, dass** es ferner Folgendes umfasst:
ein Mittel (14) zur Frequenzwandlung von Daten im Sendesignalweg (TX) bei irgendeiner wählbaren Frequenz unter Verwendung des Bands von 1 MHz bis 1000 MHz und ein Mittel (15) zur transparenten Behandlung von Daten im Empfangssignalweg (RX).

8. Modem nach Anspruch 6, **dadurch gekennzeichnet, dass** es ferner Folgendes umfasst:
ein Mittel (15) zur Frequenzwandlung von Daten im Empfangssignalweg (RX) bei irgendeiner wählbaren Frequenz unter Verwendung des Bands von 1 MHz bis 1000 MHz und ein Mittel (14) zur transparenten Behandlung von Daten im Sendesignalweg (TX).

9. Modem nach Anspruch 6, **dadurch gekennzeichnet, dass** es ferner Folgendes umfasst:
ein Mittel (14) zur Frequenzwandlung von Daten im Sendesignalweg (TX) bei irgendeiner wählbaren Frequenz unter Verwendung des Bands von 1 MHz bis 1000 MHz und ein Mittel (15) zur Frequenzwandlung von Daten im Empfangssignalweg (RX) bei irgendeiner wählbaren Frequenz unter Verwendung des Bands von 1 MHz bis 1000 MHz.

10. Kabelfernsehnetzwerk, beispielsweise eine Gemeinschaftsantennenanlage oder eine Satelliten-Gemeinschaftsantennenanlage, wobei zumindest ein Teil der an Benutzerknoten vorgesehenen Kabelsegmente als Koaxialkabel ausgeführt ist und das Kabelfernsehnetzwerk ferner mindestens ein Host-Modem und mehrere Knoten-Modems umfasst, **dadurch gekennzeichnet, dass** die Host- und Knoten-Modems Folgendes umfassen:
einen Stromleitungs-Transceiver, ein an den Empfangssignalweg (RX) des Stromleitungs-Transceivers angeschlossenes erstes Verstärker- und Filtermittel, ein an den Sendesignalweg (TX) des Stromleitungs-Transceivers angeschlossenes zweites Verstärker- und Filtermittel, ein Impedanzanpassungsmittel zum Anpassen der Impedanz von Empfangssignalweg (RX) und Sendesignalweg (TX), und einen Kombinator, um die Signalwege zu einem zu kombinieren, wobei
das mindestens eine Host-Modem und die mehreren Knoten-Modems über ein Koaxialkabelsegment in Datenübertragungsverbindung angeordnet sind und das Host-Modem so angeordnet ist, dass es die Datenübertragung und die Aufteilung der Zugangsnetzwerk-Ressourcen unter den mehreren Knoten-Modems gemäß der von den Stromleitungs-Transceivern verwendeten Medienzugangssteuerung steuert.

11. Kabelfernsehnetzwerk nach Anspruch 10, **dadurch gekennzeichnet, dass** das Netzwerk ferner Folgendes umfasst:
einen Verteilverstärker und einen an den Verteilverstärker angeschlossenen externen passiven Diplexfilter, um die Datensignale den Verteilverstärker transparent in beiden Richtungen umgehen zu lassen.

12. Kabelfernsehnetzwerk nach Anspruch 10, **dadurch gekennzeichnet, dass** das Netzwerk ferner Folgendes umfasst:
mehrere Verteilverstärker, wobei jeder Verteilverstärker einen Signaldurchgang umfasst, um die Datensignale die Verteilverstärker transparent in mindestens einer Richtung umgehen zu lassen, wobei
das Host-Modem so angeordnet ist, dass es eine Frequenzwandlung für die Daten im Sendesignalweg (TX) bei irgendeiner wählbaren Frequenz unter Verwendung des Bands von 1 MHz bis 1000 MHz durchführt und die Daten im Empfangssignalweg (RX) transparent behandelt; und
die Knoten-Modems so angeordnet sind, dass sie eine Frequenzwandlung für die Daten im Empfangssignalweg (RX) bei irgendeiner wählbaren Frequenz unter Verwendung des Bands von 1 MHz bis 1000 MHz durchführen und die Daten im Sendesignalweg (TX) transparent behandeln.

13. Kabelfernsehnetzwerk nach irgendeinem der Ansprüche 10 bis 12, **dadurch gekennzeichnet, dass**
die verwendeten Stromleitungs-Transceiver gemäß der HomePlug-1.0-Spezifikation der HomePlug Powerline Alliance betrieben werden.

## Revendications

1. Procédé permettant une communication de données dans des réseaux de distribution de télévision par câble tels que des réseaux de télévision à antenne collective et des réseaux de télévision à antenne collective satellite, dans lequel au moins une partie des segments de câble arrivant à des noeuds utilisateur est exécutée en tant que câble coaxial et le réseau de télévision par câble comprend, en outre, au moins un modem hôte et une pluralité de modems noeuds, **caractérisé en ce que** les modems hôtes et noeuds comprennent
un émetteur-récepteur de puissance, un premier moyen d'amplification et de filtrage relié au chemin de signal de réception (RX) de l'émetteur-récepteur de puissance, un second moyen d'amplification et de filtrage relié au chemin de signal d'émission (TX) de l'émetteur-récepteur de puissance, un moyen d'adaptation d'impédance pour adapter l'impédance des chemins de signaux de réception (RX) et d'émission (TX) et un multiplexeur pour multiplexer les chemins de signaux en un seul, le procédé comprenant :
l'établissement d'une connexion de transmission de données entre le au moins un modem hôte et la pluralité de modems noeuds par le biais d'un segment de câble coaxial et
la commande de la transmission de données et du partage de ressources de réseau d'accès entre la pluralité des modems noeuds selon la commande d'accès au médium utilisée par lesdits émetteurs-récepteurs de puissance.

2. Procédé selon la revendication 1, **caractérisé par**
le contournement des amplificateurs de distribution dans le réseau en utilisant un filtre diplex passif extérieur permettant aux signaux de données de passer de manière transparente dans les deux sens.

3. Procédé selon la revendication 1, **caractérisé par**
le contournement des amplificateurs de distribution dans le réseau par le biais d'un filtre de signaux permettant aux signaux de données de contourner lesdits amplificateurs de distribution de manière transparente dans le sens montant,
l'exécution d'une conversion en fréquence dans le modem hôte pour les données dans le chemin de signal d'émission (TX) pour n'importe quelle fréquence sélectionnable utilisant la bande de 1 MHz à 1000 MHz et la gestion transparente (15) des données dans le chemin de signal de réception (RX) et
l'exécution d'une conversion en fréquence dans les modems noeuds pour les données dans le chemin de signal de réception (RX) pour n'importe quelle fréquence sélectionnable utilisant la bande de 1 MHz à 1000 MHz et la gestion transparente (14) des données dans le chemin de signal d'émission (TX).

4. Procédé selon la revendication 1, **caractérisé par**
l'exécution d'une conversion en fréquence à la fois dans le modem hôte et les modems noeuds pour les données dans le chemin de signal d'émission (TX) pour n'importe quelle fréquence sélectionnable utilisant la bande de 1 MHz à 1000 MHz et
l'exécution d'une conversion en fréquence à la fois dans le modem hôte et les modems noeuds pour les données dans le chemin de signal de réception (RX) pour n'importe quelle fréquence sélectionnable utilisant la bande de 1 MHz à 1000 MHz.

5. Procédé selon l'une quelconque des revendications précédentes, **caractérisé en ce que** les émetteurs de puissance utilisés fonctionnent en conformité avec la spécification HomePlug 1.0 éditée par la HomePlug Powerline Alliance.

6. Modem pour la communication de données dans des réseaux à câble coaxial tels que des réseaux de distribution de télévision à antenne collective et des réseaux de distribution de télévision à antenne collective satellite, **caractérisé en ce qu'**il comprend
un émetteur-récepteur de puissance (2), un premier moyen d'amplification (11) et de filtrage (9, 10) relié au chemin de signal de réception (RX) de l'émetteur-récepteur de puissance (2), un second moyen d'amplification (3) et de filtrage (4, 5) relié au chemin de signal d'émission (TX) de l'émetteur-récepteur de puissance (2), un moyen d'adaptation d'impédance (13) pour adapter l'impédance des chemins de signaux de réception (RX) et d'émission (TX) et un multiplexeur (13) pour multiplexer les chemins de signaux en un seul, dans lequel :
la transmission de données et le partage de ressources de réseau d'accès entre le modem et un autre modem similaire sont adaptés pour être commandés selon la commande d'accès au médium utilisée par lesdits émetteurs-récepteurs de puissance.

7. Modem selon la revendication 6, **caractérisé en ce qu'**il comprend, en outre,
un moyen (14) de conversion en fréquence de données dans le chemin de signal d'émission (TX) pour n'importe quelle fréquence sélectionnable utilisant la bande de 1 MHz à 1000 MHz et un moyen (15) de gestion transparente des données dans le chemin de signal de réception (RX).

8. Modem selon la revendication 6, **caractérisé en ce qu'**il comprend, en outre,
un moyen (15) de conversion en fréquence de données dans le chemin de signal de réception (RX) pour n'importe quelle fréquence sélectionnable utilisant la bande de 1 MHz à 1000 MHz et un moyen (14) de gestion transparente des données dans le chemin de signal d'émission (TX).

9. Modem selon la revendication 6, **caractérisé en ce qu'**il comprend, en outre,
un moyen (14) de conversion en fréquence de données dans le chemin de signal d'émission (TX) pour n'importe quelle fréquence sélectionnable utilisant la bande de 1 MHz à 1000 MHz et un moyen (15) de conversion en fréquence de données dans le chemin de signal de réception (RX) pour n'importe quelle fréquence sélectionnable utilisant la bande de 1 MHz à 1000 MHz.

10. Réseau de distribution de télévision par câble, tel un réseau de télévision à antenne collective ou un réseau de télévision à antenne collective satellite, dans lequel au moins une partie des segments de câble arrivant à des noeuds utilisateur est exécutée en tant que câble coaxial, le réseau de télévision par câble comprenant, en outre, au moins un modem hôte et une pluralité de modems noeuds, **caractérisé en ce que** les modèles hôtes et noeuds comprennent
un émetteur-récepteur de puissance, un premier moyen d'amplification et de filtrage relié au chemin de signal de réception (RX) de l'émetteur-récepteur de puissance, un second moyen d'amplification et de filtrage relié au chemin de signal d'émission (TX) de l'émetteur-récepteur de puissance, un moyen d'adaptation d'impédance pour adapter l'impédance des chemins de signaux de réception (RX) et d'émission (TX) et un multiplexeur pour multiplexer les chemins de signaux en un seul, dans lequel
une connexion de transmission de données est établie entre le au moins un modem hôte et la pluralité de modems noeuds par le biais d'un segment de câble coaxial et le modem hôte est adapté pour commander la transmission de données et le partage de ressources de réseau d'accès entre la pluralité des modems noeuds selon la commande d'accès au médium utilisée par lesdits émetteurs-récepteurs de puissance.

11. Réseau de distribution de télévision par câble selon la revendication 10, **caractérisé en ce que** le réseau comprend, en outre,
un amplificateur de distribution et un filtre diplex passif extérieur relié audit amplificateur de distribution pour permettre aux signaux de données de contourner ledit amplificateur de distribution de manière transparente dans les deux sens.

12. Réseau de distribution de télévision par câble selon la revendication 10, **caractérisé en ce que** le réseau comprend, en outre,
une pluralité d'amplificateurs de distribution, chaque amplificateur de distribution comprenant un filtre de signaux pour permettre aux signaux de données de contourner lesdits amplificateurs de distribution de manière transparente dans au moins un sens, dans lequel
le modem hôte est adapté pour exécuter une conversion en fréquence pour les données dans le chemin de signal d'émission (TX) pour n'importe quelle fréquence sélectionnable utilisant la bande de 1 MHz à 1000 MHz et pour gérer de manière transparente les données dans le chemin de signal de réception (RX) ; et
les modems noeuds sont adaptés pour exécuter une conversion en fréquence pour les données dans le chemin de signal de réception (RX) pour n'importe quelle fréquence sélectionnable utilisant la bande de 1 MHz à 1000 MHz et pour gérer de manière transparente les données dans le chemin de signal d'émission (TX).

13. Réseau de distribution de télévision par câble selon l'une quelconque des revendications 10-12, **caractérisé en ce que**
les émetteurs-récepteurs de puissance utilisés fonctionnent en conformité avec la spécification HomePlug 1.0 éditée par la HomePlug Powerline Alliance.
